# EUROPEAN PATENT SPECIFICATION

(11) **EP 2 797 799 B1**
(45) Date of publication and mention of the grant of the patent: **19.06.2019**
(21) Application number: 12810472.6
(22) Date of filing: 11.12.2012
(51) Int. Cl.: B61C 15/10, B60B 39/02, B61L 15/00

(54) **SYSTEM AND METHOD FOR RAIL VEHICLE CONTROL**
SYSTEM UND VERFAHREN ZUR SCHIENENFAHRZEUGSTEUERUNG
SYSTÈME ET MÉTHODE DE COMMANDE DE VÉHICULES FERROVIAIRES

(30) Priority: 28.12.2011 US 201113339008
(43) Date of publication of application: 05.11.2014
(73) Proprietor: GE Global Sourcing LLC, Norwalk, CT 06851 (US)
(72) Inventor: COOPER, Jared, K., Melbourne, FL 32904 (US); ELDREDGE, David, Melbourne, FL 32904 (US); BRAND, John, Melbourne, FL 32904 (US)
(74) Representative: Herrmann, Uwe
(86) International application number: PCT/US2012/068852
(87) International publication number: WO 2013/101448

(56) References cited:
- EP-A2- 0 499 199
- WO-A1-00/71399
- WO-A1-2006/062056
- DE-A1-102005 001 404
- US-A1- 2003 034 423
- US-A1- 2009 254 231
- US-A1- 2011 099 413

## Description

### FIELD OF THE INVENTION

Embodiments of the invention relate generally to rail vehicles. Other embodiments relate to systems and methods for rail vehicle control.

### BACKGROUND OF THE INVENTION

WO 2006/062056 A1 discloses calculating a friction coefficient between a wheel and a curved rail.

A rail vehicle consist is a group of two or more rail vehicles that are mechanically coupled or linked together to travel along a track. The rail vehicles may include one or more locomotives that are coupled together or otherwise positioned at various locations throughout the consist. The consist may include one lead rail vehicle, e.g., a lead locomotive, and one or more trail vehicles, e.g., trail locomotives.

The rail vehicles in the consist may be outfitted with various functional components, such as throttling, steering and braking systems, as well as traction control systems and air compressor systems that facilitate operation of the components and systems of the consist. In connection with these systems, one or more rail vehicles in the consist may contain non-propulsion consumable resources that are utilized by one or more of these systems.

For example, certain vehicles in the consist may carry sand or other tractive material in sand reservoirs or hoppers that is dispensed during travel to increase tractive effort. In particular, at various times throughout travel of the consist, sand may be dispensed from one or more of the rail vehicles onto the rail of the track to increase adhesion between the wheels of the rail vehicle and the track. In addition, certain locomotives or other vehicles may include an air compressor for pressurizing air to be used for use with one or more operational systems, such as braking systems and tractive effort systems, as is known in the art.

Throughout travel, however, one or more rail vehicles may be exhausted of their consumable resources before other rail vehicles in the consist as a result of various operational demands. Moreover, throughout many cycles of use over an extended period of time, such tractive effort systems and air compressor systems may begin to exhibit signs of wear, requiring service or replacement. As will be appreciated, however, a system on one rail vehicle may exhibit wear at a different time, e.g., sooner or later, than the same type of system on another rail vehicle based upon differing frequencies of use.

A further system for controlling a consist of at least first and second rail vehicles is known, for example, from US 2003/0034423 A1, which is concerned with monitoring propulsion of the consist disclosed therein.

Accordingly, there is a need for a system and method for rail vehicle control that are different from systems and methods currently available.

### BRIEF DESCRIPTION OF THE INVENTION

The present invention is defined by the technical features or method steps as set forth in the accompanying independent product claim 1 and independent method claim 10, respectively, with additional features or steps disclosed in the accompanying dependent claims.

An embodiment of the present invention relates to a system for controlling a consist of at least first and second rail vehicles. The system comprises a first control unit electrically coupled to the first rail vehicle, and a second control unit electrically coupled to the second rail vehicle. The first control unit is configured to receive first signals representing a level of a non-propulsion consumable resource on-board the first rail vehicle. The second control unit is configured to receive second signals representing a level of a non-propulsion consumable resource on-board the second rail vehicle. The first control unit and the second control unit are further configured to communicate information of the level of the non-propulsion consumable resource on-board the first rail vehicle and the level of the non-propulsion consumable resource on-board the second rail vehicle, respectively, to one another over a communication link. In another embodiment, at least one of the first control unit and the second control unit is configured to prioritize use of the non-propulsion consumable resources on-board the first and second rail vehicles in dependence upon at least one parameter.

Another embodiment not forming part of the present invention relates to a system for rail vehicle control. The system comprises a control unit for a first rail vehicle in a consist. The control unit comprises a processor and is configured to receive signals indicative of amounts of a non-propulsion consumable resource available on-board the first rail vehicle and other rail vehicles in the consist. The control unit further comprises a set of instructions stored in a non-transient medium accessible by the processor. The instructions are configured to control the processor to create a schedule that manages the use of the non-propulsion consumable resource by the consist based on the signals indicative of the amounts of the non-propulsion consumable resource available on-board the first and other rail vehicles in the consist.

Another embodiment relates to a method for rail vehicle control. The method comprises a step of receiving information of a determined first amount of a non-propulsion consumable resource available on-board a first rail vehicle in a consist. The method further comprises receiving information of a determined second amount of the non-propulsion consumable resource available on-board a second rail vehicle in the consist. The method further comprises prioritizing use of the non-propulsion consumable resource in dependence upon the determined first and second amounts.

### BRIEF DESCRIPTION OF THE DRAWINGS

The present invention will be better understood from reading the following description of non-limiting embodiments, with reference to the attached drawings, wherein below:
FIG. 1 is a schematic drawing of an exemplary rail vehicle.
FIG. 2 is a schematic drawing of an exemplary rail vehicle having a tractive effort system that utilizes non-propulsion consumable resources.
FIG. 3 is a block diagram of a system for rail vehicle control based on shared information of non-propulsion consumable resources, according to an embodiment not forming part of the invention.
FIG. 4 is a flowchart illustrating a simplified subroutine of a method for rail vehicle control based on shared information of non-propulsion consumable resources, according to an embodiment of the invention.
FIG. 5 is a flowchart illustrating a simplified control subroutine of a method for rail vehicle control based on shared information of non-propulsion consumable resources, according to an embodiment of the invention.

### DETAILED DESCRIPTION OF THE INVENTION

Reference will be made below in detail to exemplary embodiments of the invention, examples of which are illustrated in the accompanying drawings. Wherever possible, the same reference numerals used throughout the drawings refer to the same or like parts. Although exemplary embodiments of the present invention are described with respect to locomotives, embodiments of the invention are also applicable for use with rail vehicles generally, meaning any vehicle that travels on a rail or track.

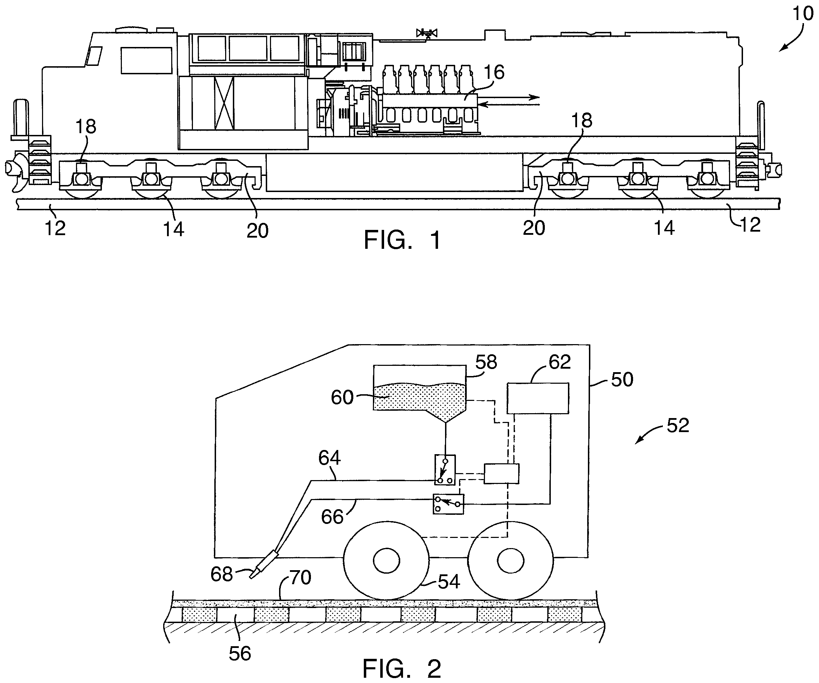

Embodiments of the invention relate to a system and method for rail vehicle control and, more particularly to system and method for rail vehicle control based on shared information of non-propulsion consumable resources. In some embodiments, the system and method for rail vehicle control of the present invention may be configured for use in connection with a locomotive. FIG. 1 shows a schematic diagram of a rail vehicle 10, herein depicted as a locomotive, configured to run on a rail 12 via a plurality of wheels 14. As depicted, the rail vehicle 10 includes an engine 16, such as an internal combustion engine. A plurality of traction motors 18 are mounted on a truck frame 20, and are each connected to one or more of the plurality of wheels 14 to provide tractive power to selectively propel and retard the motion of the rail vehicle 10.

As used herein, "non-propulsion consumable resources" are resources which are constrained as to on-board available supply, at least with respect to a specific time period, but that are not related to vehicle propulsion (e.g., fuel or stored energy). Examples of non-propulsion consumable resources include sand or other tractive material in sand reservoirs/hoppers, and pressurized air in an air compressor system or reservoir contained on one or more rail vehicles. As will be readily appreciated, compressed air may technically be classified as an unlimited resource as long as there is energy to compress the air, but air availability is limited by compressor cycle time (e.g., if the compressed air reservoir is depleted there is a delay in re-charging/re-pressurizing the reservoir). In this respect, pressurized air may be considered a non-propulsion consumable resource, as its availability at any given time is limited at least in terms of compressor cycle time.

FIG. 2 is a schematic view of a locomotive or other rail vehicle 50 with on-board non-propulsion consumable resources that are utilized, in this case, by a tractive effort system 52, as discussed in detail below. As shown therein, the rail vehicle 50 has at least one wheel 54 for traveling over a rail 56. The tractive effort system 52 includes a sand/tractive material reservoir 58, in the form of a tank, capable of holding a volume of tractive material 60. The system 52 also includes an air reservoir 62 containing a supply of pressurized air. The air reservoir 62 may be a main reservoir equalization tank that enables the function of numerous operational components of the rail vehicle 50, such as air brakes and the tractive effort system 52, or it may be a dedicated air reservoir connected to an air compressor for use by tractive effort system 52, alone. A tractive material conduit 64 and an air supply conduit 66 carry the tractive material 60 from the tractive material reservoir 58 and pressurized air from the air reservoir 62, respectively, to a nozzle 68, at which the tractive material 60 is entrained in the pressurized air stream to accelerate the tractive material 60 onto a contact surface 70 of the rail 56.

As will be readily appreciated, during use of the tractive effort system 52, the available supply of tractive material 60 in the reservoir 58 is depleted. In addition, the pressure in the air reservoir 62 similarly drops, at least until the air compressor cycles on and is able to restore the pressure level in the reservoir 62. Prior to the pressure in the air reservoir being restored, however, there may not be enough pressure in the reservoir 62 to operate other systems that utilize pressurized air from the reservoir 62. In this manner, both the tractive material and the pressurized air are non-propulsion consumable resources. The system of the present invention, as discussed below, is intended to manage and control the use of such non-propulsion consumable resources to optimize performance and provide other advantages, as hereinafter discussed.

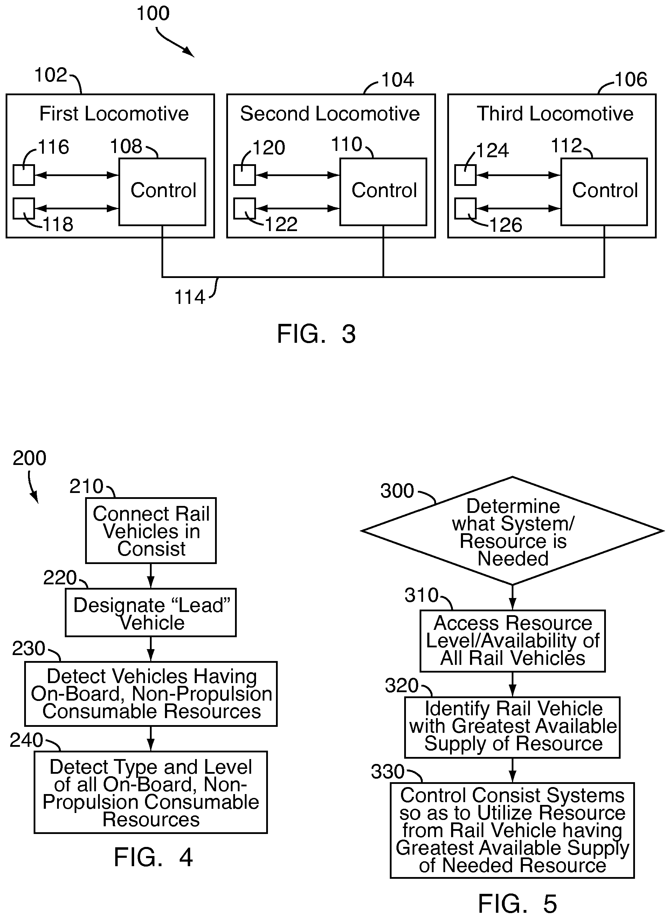

Referring to FIG. 3, a system 100 for rail vehicle control is illustrated in the context of three locomotives 102, 104, 106, shown in block form. Although the system is illustrated in a context of a three-locomotive consist, it is understood that the system and method of the present invention may also be implemented in a two-locomotive consist or in the consist having more than three locomotives. In addition, it is intended that the present invention not be limited to locomotives or train consists specifically, but that the system for rail vehicle control may be utilized in connection with rail vehicles and vehicle consists, generally.

As shown in FIG. 3, the first locomotive 102 has a first locomotive control unit 108 electrically coupled thereto that controls the operation of the locomotive and the systems contained thereon. Similarly, the second locomotive 104 has a second locomotive control unit 110 and the third rail vehicle has a third locomotive control unit 112. Each of the control units 108, 110, 112 may include a processor. As further shown in FIG. 3, the locomotive control units are interconnected by an intra-consist communications link 114. It is contemplated that the link 114 may be any wired or wireless link between the locomotive control units such as wired or wireless distributed power (i.e., remote and/or radio communications), the MU cable which often provides a hard wire communication link among locomotives in the consist (low bandwidth), or a high bandwidth/network communications link, e.g., Ethernet over an MU cable, as disclosed in U.S. Patent Application Publication No. 2011/0099413-A1. In an embodiment, the locomotive control units 108, 110 and 112 constitute an operator control for use by the operator to control one or more systems contained on the locomotives of the consist. (Although three locomotives are shown schematically in FIG. 3, embodiments of the invention are applicable to: locomotive consists, or other consists of powered rail vehicles, "powered" rail vehicles referring to rail vehicles capable of self-propulsion; locomotives or other powered rail vehicles that are part of a larger consist and spaced apart from one another by one or more freight cars or other rail cars that are not capable of self-propulsion; or combinations thereof. "Consist" generally refers to any group of linked rail vehicles, whereas locomotive consist or powered rail vehicle consist refers to a group of powered rail vehicles that are linked and immediately adjacent to one another. Thus, the communications link 114 may extend between locomotives or other powered rail vehicles or other rail vehicles that are immediately adjacent and/or spaced apart in a larger consist.)

Generally, one of the locomotives 102, 104 and 106 would be designated a lead locomotive in which an operator may ride. The operator would provide input to the control unit of the lead locomotive that would communicate corresponding input information to the other control units. In this respect, the control unit on the lead locomotive may function as a master control unit for the other locomotives in the consist.

Each locomotive 102, 104 and 106 may be outfitted with various systems containing non-propulsion consumable resources that facilitate the operation of the locomotives or the consist as a whole and which may be utilized to perform various functions. For example, one or more of the locomotives 102, 104 and 106 may have an on-board sand reservoir (or reservoir for holding another tractive material) that is part of an on-board tractive effort system, such as that described in PCT Application No. PCT/US2011/042943-A1. During travel of the consist, sand or tractive material may be selectively dispensed from the reservoir onto the rail to increase wheel-rail adhesion during starts or when a locomotive is traveling up hill. As will be readily appreciated, sand in the various sand dispensers is a consumable resource in the sense that there is a finite supply on board the consist which cannot immediately be replenished. Moreover, one or more of the locomotives may be outfitted with an on board air compressor system that is utilized to supply pressurized air to various systems and components, such as to the on-board tractive effort systems described above, and/or additional systems that utilize other non-propulsion consumable resources.

With further reference to FIG. 3, the first locomotive control unit 108 may be in communication with a first locomotive sand/tractive material reservoir 116 and a first locomotive air compressor and/or pressurized air reservoir 118 on board the first locomotive 102. Likewise, the second locomotive control unit 110 may be in communication with a second locomotive sand/tractive material reservoir 120 and a second locomotive air compressor/reservoir 122 on board the second locomotive 104, and the third locomotive control unit 112 may be in communication with a third locomotive sand/tractive material reservoir 124 and a third locomotive air compressor/reservoir 126 on board the third locomotive 106.

Information regarding a level or other status of the non-propulsion consumable resources, e.g., the level of sand in the sand reservoirs 116, 120, 124 and the pressure of air in the air compressors/reservoirs 118, 122, 126, may be communicated to the respective locomotive control units 108, 110, 112. In particular, the amount of any given non-propulsion consumable resource remaining on-board a given locomotive may be directly monitored in real-time using one or more sensors. In an embodiment, a sensor (not shown) is associated with the first locomotive air compressor/reservoir 118, which can detect a pressure of the air within the reservoir and relay this value to the first locomotive control unit 108. Similarly, a sensor or gauge (not shown) is associated with the first locomotive sand reservoir 116, which can detect a level/volume of sand in the first locomotive sand reservoir and likewise input this value to the first locomotive control unit 108. Known sensors may be employed. As will be appreciated, the second and third locomotive control units 110, 112 receive information regarding the levels of the non-propulsion consumable resource contained on the second and third locomotives 104, 106, respectively, in the same manner.

In an embodiment, alternatively, each control unit 108, 110, 112 may indirectly calculate the amount of any given non-propulsion consumable resource remaining on board the respective locomotives utilizing an algorithm or look-up tables stored in the control units. For example, the amount of sand remaining in the first locomotive sand reservoir 116 may be determined by calculating the amount of sand dispensed from the reservoir 116 during a single dispensing event based on the known flow rate of sand (which may be selectively set or varied as described in PCT Application No. PCT/US2011/042943, noted above) and duration of the dispensing event. The total amount of sand dispensed form the reservoir 116 since the beginning of travel may then be calculated by adding up the calculated amount of sand dispensed over all dispensing events, and subtracting this value from the reservoir capacity or the starting volume of sand in the reservoir 116. As will be readily appreciated, utilizing this "indirect" method, the amount of a non-propulsion consumable resource on-board a given locomotive is determined based on known parameters, rather than a direct reading from a sensor, gauge, etc.

In operation, throughout travel of the consist, each locomotive control unit 108, 110, 112 collects and stores information regarding a level of the non-propulsion consumable resources remaining on the respective locomotives 102, 104, 106 with which the control units are associated. Indeed, at any point during travel, the first locomotive control unit 108 stores values representing the amount of sand remaining in the first locomotive sand reservoir 116, the pressure in the first locomotive air reservoir 118, etc. The second and third locomotive control units 110, 112 similarly store values representing the status of non-propulsion consumable resources remaining on-board the second and third locomotives 104, 106.

These stored values of the respective levels of the non-consumable resources of each locomotive are communicated/shared through the communications link 114 to each of the locomotive control units 108, 110, 112, or to a designated one or more of the control units. In an embodiment, all of the non-propulsion consumable resource level values are communicated to the control unit on-board the locomotive that has been designated as the lead locomotive. In this respect, the control unit on-board the designated lead locomotive functions as a "master" control unit, as discussed hereinafter. In another embodiment, the locomotives 102, 104, 106 may keep track of the non-propulsion consumable resource status across all such locomotives in a coordinated or distributed manner.

In the embodiment where a "master" control unit is designated, the master control unit may then prioritize the use of the non-propulsion consumable resources across the entire consist according to a control algorithm, e.g., in dependence upon one or more pre-set parameters. In particular, the master control unit, or any one or more of the control units 108, 110, 112, may have an algorithm embodied within the processor(s) of the control units having access to the stored resource levels to create a non-propulsion consumable resource priority plan that optimizes or otherwise manages the use of the non-propulsion consumable resources in the consist in accordance with the one or more predetermined parameters. In another embodiment, the control unit may prioritize the use of the non-propulsion consumable resources on the locomotive or rail vehicle in the consist having the most of such resources, or if one locomotive is particularly low on such resources (e.g., below a designated threshold in comparison to levels on other vehicles), prioritize the use of the resources from another locomotive.

In an embodiment, when determining how to prioritize the use of the non-propulsion consumable resources on-board the various locomotives in the consist, the system 100 will take into account whether and to what extent using resources in the various locomotives is fungible. Thus, if the system 100 would otherwise prioritize using sand from the first locomotive 102 over the second locomotive 104, but using sand of the first locomotive 102 is not equivalent, e.g., in terms of effectiveness or the like, to using sand of the second locomotive 104 (within established parameters), then the system will not do so. For example, for a consist with three locomotives immediately adjacent one another, applying sand from a second locomotive (e.g., locomotive 104) instead of the first locomotive (e.g., locomotive 102) might be sufficiently acceptable, from a sand performance or tractive effort level. If the second locomotive, however, is instead in the rear of the consist, away from the lead/first locomotive, then this might not be the case.

As will be readily appreciated, by monitoring the use and level of non-propulsion consumable resources across all the locomotives of a consist, and adjusting/tailoring the use of such resources in dependence upon the monitored level of resources across all locomotives in the consist (and/or in dependence upon other predetermined parameters), a more even distribution of wear and even consumption of resources across the consist can be realized. For example, the various systems utilizing a certain non-propulsion consumable resources may be replaced or serviced simultaneously as they exhibit wear at the same rate, rather than having to take the consist out of service to replace, e.g., a tractive effort system on one locomotive, and six-months later take the consist out of service again to replace the tractive effort system on another locomotive. Accordingly, efficiency of the consist as a whole is improved and cost savings may be realized.

In an embodiment, it is contemplated that the system 100 of the present invention may be implemented and utilized in conjunction with an on-board energy management system, such as that described in U.S. Patent Application Publication No. 2007/0219680-A1.

FIG. 4 illustrates a method 200 for rail vehicle control based on shared information of non-propulsion consumable resources, according to an embodiment of the present invention. In particular, FIG. 4 illustrates a simplified subroutine of a method 200 for rail vehicle control as carried out by the system 100 described above. At an initial step 210, two or more rail vehicles are coupled, either directly adjacent one another or spaced apart, in a rail vehicle consist. This coupling also provides a communication link between the rail vehicles, as discussed above. As shown at step 220, a lead rail vehicle or master rail vehicle and control unit may then be designated. All vehicles carrying on-board, non-propulsion consumable resources are then automatically detected by the master control unit, as shown at step 230. As illustrated at step 240, after the non-propulsion consumable resource carrying vehicles are detected, the type and level of non-propulsion consumable resource is detected and a system starting setpoint is determined.

As discussed above, according to the control algorithm, the control unit then adjusts the use of the non-propulsion consumable resources from the respective rail vehicles carrying such resources in dependence upon set (i.e., designated) parameters. For example, the rail vehicle having the lowest available supply of a given resource may be designated "lowest" use priority while the rail vehicle having the greatest available supply may be designated "highest" use priority. In this manner, the control unit may create a usage "schedule" to optimize or otherwise manage the use of the non-propulsion consumable resources by the consist. As another example, the designated parameters may include relative levels of the non-propulsion consumable resources, plus a determination of whether use of the non-propulsion consumable resources in different rail vehicles is functionally fungible. Thus, the control unit may be configured (e.g., according to an algorithm embodied as a set of instructions stored in a non-transient medium and accessible by the control unit) to: receive information about determined levels of the non-propulsion consumable resources in two or more rail vehicles; identify a subset of the two or more rail vehicles where use of the non-propulsion consumable resources is fungible (e.g., using the non-propulsion consumable resources in one vehicle is functionally the same as using the non-propulsion consumable resources in another vehicle, or functionally the same within a designated threshold); and prioritize use of the non-propulsion consumable resources between the vehicles of the identified subset, e.g., between two of the vehicles of the subset, a first one of the vehicles having a greater amount of the non-propulsion consumable resource than a second one of the vehicles, using the non-propulsion consumable resource of the first vehicle before the non-propulsion consumable resource of the second vehicle, at least until the levels are balanced.

In embodiments, a control unit is configured to determine priority of use of a non-propulsion consumable resource based on whether use of the non-propulsion consumable resource is functionally fungible as between two or more rail vehicles. In one embodiment, the control unit is configured to generate control signals such that the non-propulsion consumable resource is firstly used on the rail vehicle having the most of the non-propulsion consumable resource, but only if such use is functionally the same in terms of consist operation (versus using the non-propulsion consumable resource on another vehicle). In another embodiment, the non-propulsion consumable resource is firstly used on the rail vehicle having the most of the non-propulsion consumable resource, but only if such use is functionally the same in terms of consist operation within a designated threshold, such as 5% or 10%. That is, if using the non-propulsion consumable resource on the rail vehicle have the most of the non-propulsion consumable resource will still provide the same functionality within 5% or 10%, for example, then the non-propulsion consumable resource is first used in that rail vehicle. In another embodiment, the control unit is additionally configured to take into account the degree to which there is a disparity between levels of the non-propulsion consumable resource, either generally or in regards to determining if using the resource if functionally fungible. For example, the control unit may be configured to default to using the non-propulsion consumable resource in a first rail vehicle (e.g., a designated lead rail vehicle) unless the level of the non-propulsion consumable resource on the first rail vehicle is less than the level on other, functionally fungible rail vehicles by a designated amount. In another example, the control unit is configured to prioritize use of the non-propulsion consumable resource based on a sliding scale of: (i) relative levels of the resource; and (ii) functional differences within various designated ranges. Thus, as between two rail vehicles in a consist, if the first rail vehicle has more of the non-propulsion consumable resource than the second rail vehicle, then the control unit may be configured to use the non-propulsion consumable resource firstly on the first rail vehicle if, for example: (i) the levels are apart by at least a first designated amount (e.g., 5%) and the functionality (of using the resource on the first rail vehicle versus using the resource on the second rail vehicle) is the same or within a second designated amount (e.g., 5%); or (ii) the levels are apart by at least a third designated amount that is greater than the first designated amount (e.g., 20%) and the functionality is within a fourth designated amount that is greater than the second designated amount (e.g., 10%); or (iii) the levels are apart by at least a fifth designated amount that is greater than the third designated amount (e.g., 90%) and the functionality is within a sixth designated amount that is greater than the fourth designated amount (e.g., 50%). In other words, the greater the disparity between resource levels (such as one vehicle being relatively very low on the resource), the more likely it is that the control unit will use the resource on another rail vehicle with more of the resource, even if doing so is less effective.

In another embodiment, a control unit may be configured to create a usage schedule to manage the use of the non-propulsion consumable resources in at least first and second rail vehicles. The control unit receives first information about the non-propulsion consumable resources, such as the respective currently available level of the non-propulsion consumable resource in each rail vehicle. The control unit receives, and/or has access to, respective second information about how each rail vehicle uses the non-propulsion consumable resource (e.g., rates of use), what effect the use has in relation to the consist as a whole, and/or what capability each rail vehicle has, if any, for re-generating the non-propulsion consumable resource over time (for example, it may be the case that pressurized air can be regenerated over time by an on-board air compressor). Based on the first and second information, the control unit then generates the schedule, which specifies, over a time period, which rail vehicles will use the non-propulsion consumable resources during which portions of the time period. For example, in the case where use of the non-propulsion consumable resource is functionally fungible as between plural rail vehicles in a consist, the schedule may comprise: using the non-propulsion consumable resource of the rail vehicle having the most of the resource, until there is no longer a disparity; and then sequentially switching to using the non-propulsion consumable resource on all the rail vehicles, each for a designated time period, for both load balancing and balancing in-service time.

A simplified control subroutine (for the control of non-propulsion consumable resources) is depicted in FIG. 5. As shown at step 300, an operator or an on-board computer selects a specific system that utilizes a non-propulsion consumable resource. For example, if traction is need to facilitate the consist moving from a dead stop or on an incline, an operator may call upon a tractive effort system on-board one of the rail vehicles in the consist to increase wheel-to-rail adhesion. Upon selection, the designated lead rail vehicle (and designated/determined master control unit) directly or indirectly assesses the non-propulsion consumable resource level available on each rail vehicle, as shown at step 310. In the present example of the need to increase tractive effort, the control unit may assess the tractive material and pressurized air level available on each rail vehicle. The control unit then identifies the rail vehicle with the greatest available amount of the non-propulsion consumable resource (step 320) and then controls the consist so as to utilize the resource from the rail vehicle having the greatest available supply (step 330). In the present example, the control unit initiates the tractive effort system on the rail vehicle having the greatest available supply of tractive material and/or pressurized air. Alternatively, step 320 may involve the use of a control algorithm to determine which rail vehicle the demanded resource should be drawn from, in dependence upon one or more predetermined parameters, as discussed above (i.e., it may not depend solely on available supply).

As further shown in FIG. 5, if increased rail adhesion is still needed, the control unit may again assess the non-propulsion consumable resource level available on each rail vehicle and again proceed with steps 320 and 330, as hereinbefore described, until the consist can travel freely without slippage.

An embodiment of the present invention relates to a system for controlling a consist of at least first and second rail vehicles. The system comprises a first control unit electrically coupled to the first rail vehicle, and a second control unit electrically coupled to the second rail vehicle. The first control unit is configured to receive first signals representing a level of a non-propulsion consumable resource on-board the first rail vehicle. The second control unit is configured to receive second signals representing a level of a non-propulsion consumable resource on-board the second rail vehicle. The first control unit and the second control unit are further configured to communicate information of the level of the non-propulsion consumable resource on-board the first rail vehicle and the level of the non-propulsion consumable resource on-board the second rail vehicle, respectively, to one another over a communication link. In another embodiment, at least one of the first control unit and the second control unit is configured to prioritize use of the non-propulsion consumable resources on-board the first and second rail vehicles in dependence upon at least one parameter. For example, at least one of the first control unit and/or the second control unit may include a processor configured for prioritizing the use of the non-propulsion consumable resources on-board the first and second rail vehicles in dependence upon at least one parameter. The parameter(s) may include a position of the first rail vehicle with respect to the position of the second rail vehicle in the consist. An algorithm embodied within the processor having access to the levels of non-propulsion consumable resources available on-board the first and second rail vehicles may be utilized to create a schedule that optimizes the use of the non-propulsion consumable resources on-board the first and second rail vehicles. The non-propulsion consumable resource may be a tractive material for use in an on-board tractive effort system or compressed air. The communication link may be a high-bandwidth communication link and/or a remote or radio communication link.

In one embodiment, a system for rail vehicle control comprises a control unit for a first rail vehicle in a consist. The control unit is configured to be electrically coupled with the first rail vehicle. The control unit comprises a processor, and is further configured to receive signals indicative of amounts of a non-propulsion consumable resource available on-board the first rail vehicle and other rail vehicles in the consist. The control unit further comprises a set of instructions stored in a non-transient medium accessible by the processor. The instructions are configured to control the processor to create a schedule that manages the use of the non-propulsion consumable resource by the consist based on the signals indicative of the amounts of the non-propulsion consumable resource available on-board the first and other rail vehicles in the consist. The non-propulsion consumable resource may a tractive material for use in an on-board tractive effort system or compressed air for use for various purposes. The amount of non-propulsion consumable resources available on-board each rail vehicle in the consist may transmitted to the control unit via a communication link including an Ethernet over MU communication link. Each of the rail vehicles in the consist may include a sensor for determining the amount of non-propulsion consumable resource on-board the rail vehicle, wherein each sensor is in communication with the control unit for transmitting the amount of non-propulsion consumable resource thereto.

According to another embodiment, a method for rail vehicle control comprises a step of receiving information of a determined first amount of a non-propulsion consumable resource available on-board a first rail vehicle in a consist. (The first amount may be determined on the first rail vehicle using sensors, for example, with information of the output of the sensors being subsequently communicated.) The method further comprises receiving information of a determined second amount of the non-propulsion consumable resource available on-board a second rail vehicle in the consist. (The second amount may be determined on the second rail vehicle using sensors, for example, with information of the output of the sensors being subsequently communicated.) The method further comprises prioritizing use of the non-propulsion consumable resource in dependence upon the determined first and second amounts. The step of prioritizing the use of the non-propulsion consumable resource can include the step of determining a position of the first rail vehicle with respect to the second rail vehicle within the consist. The method may also include the step of sharing the determined amounts of the non-propulsion consumable resource between the first and second rail vehicle via a communication link. The communication link may be one of remote or a radio communications, low bandwidth communications and high bandwidth communications. Moreover, the step of prioritizing use of the non-propulsion consumable resource ay include the steps of comparing the determined amount of the resource on-board the first rail vehicle with the determined amount of the resource on-board the second rail vehicle and controlling the rail vehicles so as to utilize the resource from the rail vehicle having a greater amount of the resource.

It is to be understood that the above description is intended to be illustrative, and not restrictive. For example, the above-described embodiments (and/or aspects thereof) may be used in combination with each other insofar as they remain within the scope of the invention as defined by the claims. Along the same lines, many modifications may be made to adapt a particular situation or material to the teachings of the invention without departing from its scope. While the dimensions and types of materials described herein are intended to define the parameters of the invention, they are by no means limiting and are exemplary embodiments. Many other embodiments will be apparent to those of skill in the art upon reviewing the above description. The scope of the invention should, therefore, be determined with reference to the appended claims. In the appended claims, the terms "including" and "in which" are used as the plain-English equivalents of the respective terms "comprising" and "wherein." Moreover, in the following claims, the terms "first," "second," "third," "upper," "lower," "bottom," "top," etc. are used merely as labels, and are not intended to impose numerical or positional requirements on their objects. Further, the limitations of the following claims are not written in means-plus-function format and are not intended to be interpreted based on 35 U.S.C. § 112, sixth paragraph, unless and until such claim limitations expressly use the phrase "means for" followed by a statement of function void of further structure.

This written description uses examples to disclose several embodiments of the invention, including the best mode, and also to enable one of ordinary skill in the art to practice the embodiments of invention, including making and using any devices or systems and performing any incorporated methods. The scope of the invention is defined by the claims, and may include other examples that occur to one of ordinary skill in the art. Such other examples are intended to be within the scope of the claims if they have structural elements that do not differ from the literal language of the claims, or if they include structural elements with insubstantial differences from the literal language of the claims.

As used herein, an element or step recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property.

Since certain changes may be made in the above-described system and method for rail vehicle control, without departing from the scope of the invention herein involved, it is intended that all of the subject matter of the above description or shown in the accompanying drawings shall be interpreted merely as examples illustrating the inventive concept herein and shall not be construed as limiting the invention.

## Claims

1. A system (100) for controlling a consist of at least first and second rail vehicles (102, 104), the system comprising:
a first control unit (108) electrically coupled to the first rail vehicle (102), the first control unit (108) being configured to receive first signals representing a level of a non-propulsion consumable resource on-board the first rail vehicle (102);
a second control unit (110) electrically coupled to the second rail vehicle (104), the second control unit (110) being configured to receive second signals representing a level of a non-propulsion consumable resource on-board the second rail vehicle (104);
wherein the first control unit (108) and the second control unit (110) are configured to communicate information of the level of the non-propulsion consumable resource on-board the first rail vehicle (102) and the level of the non-propulsion consumable resource on-board the second rail vehicle (104), respectively, to one another over a communication link (114).

2. The system of claim 1, wherein:
at least one of the first control unit (108) or the second control unit (110) includes a processor configured for prioritizing use of the non-propulsion consumable resources on-board the first and second rail vehicles (102, 104) in dependence upon at least one parameter.

3. The system of claim 2, wherein:
the at least one parameter includes a position of the first rail vehicle (102) with respect to the position of the second rail vehicle (104) in the consist.

4. The system of claim 2, wherein:
the processor has access to the information of the levels of non-propulsion consumable resources available on-board the first and second rail vehicles (102, 104) and is configured to create a schedule based on the information that manages the use of the non-propulsion consumable resources on-board the first and second rail vehicles (102, 104).

5. The system of any preceding claim, wherein:
the non-propulsion consumable resource is a tractive material (60) for use in an on-board tractive effort system (52).

6. The system of any preceding claim, wherein:
the non-propulsion consumable resource is compressed air.

7. The system of any preceding claim, wherein:
the communication link (114) is a high-bandwidth communication link.

8. The system of any preceding claim, wherein:
the communication link (114) is a remote or radio controlled communications link.

9. The system of any preceding claim, wherein:
the first rail vehicle (102) is a lead rail vehicle and the first control unit (108) is a master control unit; and
wherein the second rail vehicle (104) is a trail rail vehicle.

10. A method for rail vehicle control, the method comprising the steps of:
receiving information of a determined first amount of a non-propulsion consumable resource available on-board a first rail vehicle (102) in a consist;
receiving information of a determined second amount of the non-propulsion consumable resource available on-board a second rail vehicle (104) in the consist; and
prioritizing use of the non-propulsion consumable resource in dependence upon the determined first and second amounts; wherein:
the step of prioritizing use of the non-propulsion consumable resource includes comparing the determined first amount of the resource on-board the first rail vehicle (102) with the determined second amount of the resource on-board the second rail vehicle (104); and
controlling the first and second rail vehicles (102, 104) in the consist so as to utilize the resource from the first rail vehicle (102) or the second rail vehicle (104) having a greater amount of the resource.

11. The method according to claim 10, further comprising the step of:
communicating the information of the determined first amount and the information of the determined second amount between the first and second rail vehicles (102, 104) via a communication link (114), the communication link (114) comprising one or more of wired or wireless distributed power, low bandwidth communications, or high bandwidth communications.

12. The method according to claim 10, wherein:
the step of prioritizing the use of the non-propulsion consumable resource includes determining a position of the first rail vehicle (102) with respect to the second rail vehicle (104) within the consist.

## Patentansprüche

1. System (100) zum Steuern eines Wagenverbands aus mindestens ersten und zweiten Schienenfahrzeugen (102, 104), wobei das System umfasst:
eine erste Steuereinheit (108), die elektrisch mit dem ersten Schienenfahrzeug (102) gekoppelt ist, wobei die erste Steuereinheit (108) konfiguriert ist, um erste Signale zu empfangen, die einen Füllstand eines nicht dem Antrieb dienenden Verbrauchsmaterials an Bord des ersten Schienenfahrzeugs (102) darstellen;
eine zweite Steuereinheit (110), die elektrisch mit dem zweiten Schienenfahrzeug (104) gekoppelt ist, wobei die zweite Steuereinheit (110) konfiguriert ist, um zweite Signale zu empfangen, die einen Füllstand eines nicht dem Antrieb dienenden Verbrauchsmaterials an Bord des zweiten Schienenfahrzeugs (104) darstellen;
wobei die erste Steuereinheit (108) und die zweite Steuereinheit (110) konfiguriert sind, um Informationen über den Füllstand des nicht dem Antrieb dienenden Verbrauchsmaterials an Bord des ersten Schienenfahrzeugs (102) und den Füllstand des nicht dem Antrieb dienenden Verbrauchsmaterials an Bord des zweiten Schienenfahrzeugs (104) über eine Kommunikationsverbindung (114) jeweils einander zu übermitteln.

2. System nach Anspruch 1, wobei:
mindestens eine von erster Steuereinheit (108) oder zweiter Steuereinheit (110) einen Prozessor umfasst, der für das Priorisieren der Nutzung der nicht dem Antrieb dienenden Verbrauchsmaterialien an Bord der ersten und zweiten Schienenfahrzeuge (102, 104) in Abhängigkeit von mindestens einem Parameter konfiguriert ist.

3. System nach Anspruch 2, wobei:
der mindestens eine Parameter eine Position des ersten Schienenfahrzeugs (102) in Bezug auf die Position des zweiten Schienenfahrzeugs (104) in der Wagenverband umfasst.

4. System nach Anspruch 2, wobei:
der Prozessor Zugriff auf die Informationen über die Füllstände an nicht dem Antrieb dienenden Verbrauchsmaterialien hat, die an Bord der ersten und zweiten Schienenfahrzeuge (102, 104) verfügbar sind, und konfiguriert ist, um einen Plan basierend auf den Informationen zu erstellen, der die Nutzung der nicht dem Antrieb dienenden Verbrauchsmaterialien an Bord der ersten und zweiten Schienenfahrzeuge (102, 104) verwaltet.

5. System nach einem vorhergehenden Anspruch, wobei:
das nicht dem Antrieb dienende Verbrauchsmaterial ein Zugmaterial (60) zur Verwendung in einem bordeigenen Zugkraftsystem (52) ist.

6. System nach einem vorhergehenden Anspruch, wobei:
das nicht dem Antrieb dienende Verbrauchsmaterial Druckluft ist.

7. System nach einem vorhergehenden Anspruch, wobei:
die Kommunikationsverbindung (114) eine Kommunikationsverbindung mit hoher Bandbreite ist.

8. System nach einem vorhergehenden Anspruch, wobei:
die Kommunikationsverbindung (114) eine ferngesteuerte oder funkgesteuerte Kommunikationsverbindung ist.

9. System nach einem vorhergehenden Anspruch, wobei:
das erste Schienenfahrzeug (102) ein führendes Schienenfahrzeug ist und die erste Steuereinheit (108) eine Hauptsteuereinheit ist; und
wobei das zweite Schienenfahrzeug (104) ein nachfolgendes Schienenfahrzeug ist.

10. Verfahren zur Steuerung von Schienenfahrzeugen, wobei das Verfahren die folgenden Schritte umfasst:
Empfangen von Informationen über eine ermittelte erste Menge eines nicht dem Antrieb dienenden Verbrauchsmaterials, die an Bord eines ersten Schienenfahrzeugs (102) in einem Wagenverband verfügbar ist;
Empfangen von Informationen über eine ermittelte zweite Menge des nicht dem Antrieb dienenden Verbrauchsmaterials, die an Bord eines zweiten Schienenfahrzeugs (104) in dem Wagenverband verfügbar ist; und
Priorisieren der Nutzung des nicht dem Antrieb dienenden Verbrauchsmaterials in Abhängigkeit von den ermittelten ersten und zweiten Mengen; wobei:
der Schritt des Priorisierens der Nutzung des nicht dem Antrieb dienenden Verbrauchsmaterials das Vergleichen der ermittelten ersten Menge des an Bord des ersten Schienenfahrzeugs (102) befindlichen Materials mit der ermittelten zweiten Menge des an Bord des zweiten Schienenfahrzeugs (104) befindlichen Materials umfasst; und
Steuern der ersten und zweiten Schienenfahrzeuge (102, 104) in dem Wagenverband, um das Material von dem ersten Schienenfahrzeug (102) oder dem zweiten Schienenfahrzeug (104), das eine größere Menge des Materials aufweist, zu nutzen.

11. Verfahren nach Anspruch 10, welches weiterhin folgenden Schritt umfasst:
Übermitteln der Information der ermittelten ersten Menge und der Information der ermittelten zweiten Menge zwischen den ersten und zweiten Schienenfahrzeugen (102, 104) über eine Kommunikationsverbindung (114), wobei die Kommunikationsverbindung (114) eine oder mehrere von drahtgebundenen oder drahtlosen Kommunikationen niedriger Bandbreite oder hoher Bandbreite mit der verteilten Traktionseinheit umfasst.

12. Verfahren nach Anspruch 10, wobei:
der Schritt des Priorisierens der Nutzung des nicht dem Antrieb dienenden Verbrauchsmaterials das Ermitteln einer Position des ersten Schienenfahrzeugs (102) in Bezug auf das zweite Schienenfahrzeug (104) innerhalb des Wagenverbands umfasst.

## Revendications

1. Système (100) pour commander une rame composée d'au moins un premier et un second véhicule ferroviaire (102, 104), le système comprenant :
une première unité de commande (108) couplée électriquement au premier véhicule ferroviaire (102), la première unité de commande (108) étant configurée pour recevoir des premiers signaux représentant un niveau d'une ressource consommable de non-propulsion à bord du premier véhicule ferroviaire (102) ;
une seconde unité de commande (110) couplée électriquement au second véhicule ferroviaire (104), la seconde unité de commande (110) étant configurée pour recevoir des seconds signaux représentant un niveau d'une ressource consommable de non-propulsion à bord du second véhicule ferroviaire (104) ;
dans lequel la première unité de commande (108) et la seconde unité de commande (110) sont configurées pour communiquer l'une à l'autre des informations respectivement sur le niveau de la ressource consommable de non-propulsion à bord du premier véhicule ferroviaire (102) et le niveau de la ressource consommable de non-propulsion à bord du second véhicule ferroviaire (104) par le biais d'une liaison de communication (114).

2. Système selon la revendication 1, dans lequel :
au moins une de la premier unité de commande (108) et la seconde unité de commande (110) comprend un processeur configuré pour hiérarchiser l'utilisation des ressources consommables de non-propulsion à bord des premier et second véhicules ferroviaires (102, 104) en fonction d'au moins un paramètre.

3. Système selon la revendication 2, dans lequel :
l'au moins un paramètre comprend la position du premier véhicule ferroviaire (102) par rapport à la position du second véhicule ferroviaire (104) dans la rame.

4. Système selon la revendication 2, dans lequel :
le processeur a accès aux informations sur les niveaux de ressources consommables de non-propulsion disponibles à bord des premier et second véhicules ferroviaires (102, 104) et est configuré pour, sur la base des informations, créer un programme qui gère l'utilisation des ressources consommables de non-propulsion à bord des premier et second véhicules ferroviaires (102, 104).

5. Système selon l'une quelconque des revendications précédentes, dans lequel :
la ressource consommable de non-propulsion est un matériau de traction (60) destiné à être utilisé dans un système d'effort de traction (52) embarqué.

6. Système selon l'une quelconque des revendications précédentes, dans lequel :
la ressource consommable de non-propulsion est de l'air comprimé.

7. Système selon l'une quelconque des revendications précédentes, dans lequel :
la liaison de communication (114) est une liaison de communication à large bande passante.

8. Système selon l'une quelconque des revendications précédentes, dans lequel :
la liaison de communication (114) est une liaison de communication à distance ou radiocommandée.

9. Système selon l'une quelconque des revendications précédentes, dans lequel :
le premier véhicule ferroviaire (102) est un véhicule ferroviaire de tête et la première unité de commande (108) est une unité de commande maître ; et
dans lequel le second véhicule ferroviaire (104) est un véhicule ferroviaire mené.

10. Méthode pour la commande de véhicules ferroviaires, la méthode comprenant les étapes de :
réception d'informations sur une première quantité déterminée d'une ressource consommable de non-propulsion disponible à bord d'un premier véhicule ferroviaire (102) dans une rame ;
réception d'informations sur une seconde quantité déterminée de la ressource consommable de non-propulsion disponible à bord d'un second véhicule ferroviaire (104) dans la rame ; et
hiérarchisation de l'utilisation de la ressource consommable de non-propulsion en fonction des première et seconde quantités déterminées ; dans laquelle :
l'étape de hiérarchisation de l'utilisation de la ressource consommable de non-propulsion comprend la comparaison de la première quantité déterminée de la ressource à bord du premier véhicule ferroviaire (102) et de la seconde quantité déterminée de la ressource à bord du second véhicule ferroviaire (104) ; et
la commande des premier et second véhicules ferroviaires (102, 104) dans la rame de manière à utiliser la ressource du premier véhicule ferroviaire (102) ou du second véhicule ferroviaire (104) qui présente une quantité plus élevée de la ressource.

11. Méthode selon la revendication 10, comprenant en outre l'étape de :
communication entre les premier et second véhicules ferroviaire (102, 104) des informations sur la première quantité déterminée et des informations sur la seconde quantité déterminée par le biais d'une liaison de communication (114), la liaison de communication (114) comprenant la distribution d'énergie avec ou sans fil, des communications à faible bande passante et/ou des communications à large bande passante.

12. Méthode selon la revendication 10, dans laquelle :
l'étape de hiérarchisation de l'utilisation de la ressource consommable de non-propulsion comprend la détermination de la position du premier véhicule ferroviaire (102) par rapport au second véhicule ferroviaire (104) dans la rame.
